Europäisches Patentamt

European Patent Office

Office européen des brevets

(19)

(11) Veröffentlichungsnummer: **0 144 325**
**B1**

(12)
# EUROPÄISCHE PATENTSCHRIFT

(45) Veröffentlichungstag der Patentschrift:
**01.04.87**

(51) Int. Cl.⁴: **G 01 N 27/38**

(21) Anmeldenummer: **83903780.1**

(22) Anmeldetag: **12.12.83**

(86) Internationale Anmeldenummer:
**PCT/CH 83/00139**

(87) Internationale Veröffentlichungsnummer:
**WO 84/04814 (06.12.84 Gazette 84/28)**

(54) **VORRICHTUNG ZUM ELEKTROCHEMISCHEN ERMITTELN DES SAUERSTOFFGEHALTES IN FLÜSSIGKEITEN.**

(30) Priorität: **02.06.83 CH 3015/83**

(43) Veröffentlichungstag der Anmeldung:
**19.06.85 Patentblatt 85/25**

(45) Bekanntmachung des Hinweises auf die Patenterteilung:
**01.04.87 Patentblatt 87/14**

(84) Benannte Vertragsstaaten:
**AT BE DE FR GB LU NL SE**

(56) Entgegenhaltungen:
**GB - A - 2 092 306**
**US - A - 4 288 308**

(73) Patentinhaber: **ZÜLLIG AG RHEINECK, Ebenau,
CH-9424 Rheineck (CH)**

(72) Erfinder: **CHIUSOLE, Erwin, Geissmeierstrasse 11,
A-6900 Bregenz (AT)**
Erfinder: **ZÜLLIG, Hans, Brendenweg 9,
CH-9424 Rheineck (CH)**

(74) Vertreter: **Scheidegger, Zwicky, Werner & Co.,
Stampfenbachstrasse 48 Postfach, CH-8023 Zürich (CH)**

## Beschreibung

Die vorliegende Erfindung betrifft eine Vorrichtung zum elektrochemischen Ermitteln des Sauerstoffgehaltes in Flüssigkeiten durch Messen des elektrischen Stromes zwischen zwei in die Flüssigkeit einzutauchenden Elektroden aus unterschiedlichen Materialien, welche Elektroden mit Ausnahme ihrer wirksamen freien Endflächen vollständig in Isoliermaterial eingebettet sind, wobei zur Reinigung der freien Elektrodenendflächen ein mittels einer Antriebsvorrichtung bewegbares Schleiforgan durch mindestens eine Feder sowohl an die freien Elektrodenendflächen als auch an angrenzende Oberflächenpartien des Isoliermaterials angedrückt ist und die Elektroden derart geformt und angeordnet sind, dass bei fortschreitendem Abschleifen der Elektroden und des Isoliermaterials die Form, die Grösse und der gegenseitige Abstand der wirksamen Elektrodenendflächen unverändert bleiben.

Eine Vorrichtung der genannten Art ist z.B. aus der scheizerischen Patentschrift 469 981 bekannt. Gemäss jener Druckschrift sind zwei Elektroden durch koaxial angeordnete, einen radialen Abstand voneinander aufweisende Rohrabschnitte gebildet, die mit Ausnahme ihrer einen, auf der gleichen axialen Seite liegenden Endflächen vollständig in einen elektrisch isolierenden Kunststoffkörper eingebettet sind. Zur Reinigung der wirksamen, freien Elektrodenendflächen ist ein durch eine Antriebsvorrichtung um die Achse der Rohrabschnitte drehbarer Schleifkörper vorgesehen, welcher mit einer Schleiffläche an den freien Endflächen der Rohrabschnitte und an den an diese Endflächen angrenzenden Oberflächenpartien des Kunststoffkörpers anliegt und unter dem Einfluss einer Feder an die genannten Flächen angedrückt ist. Obwohl diese bekannte Vorrichtung sich in der Praxis gut bewährt hat, ist sie mit einem unter Umständen störenden Nachteil behaftet: Infolge unterschiedlicher Härten, Abriebsfestigkeiten und Korrosionseigenschaften der zwei aus verschiedenen Werkstoffen bestehenden Elektroden ist eine völlig gleichmässige Abnützung durch den gemeinsamen Schleifkörper nicht immer gewährleistet und können unterschiedliche Ablagerungen von Schleifpartikeln an den freien Elektrodenendflächen haften bleiben. Daraus ergeben sich Schwankungen in den elektrochemischen Eigenschaften der freien Elektrodenendflächen, wodurch die Genauigkeit der Sauerstoffmessungen beeinträchtigt oder ein häufiges Nacheichen der Messanordnung erforderlich wird.

Der vorliegenden Erfindung liegt nun die Aufgabe zugrunde, zwecks Vermeidung des geschilderten Nachteiles eine Vorrichtung der eingangs beschriebenen Art derart auszugestalten, dass eine erhöhte Gleichmässigkeit des Abschleifens und Säuberns der zwei freien Elektrodenendflächen durch das gemeinsame Schleiforgan gewährleistet ist.

Diese Aufgabe ist durch die Schaffung der im Anspruch 1 definierten Vorrichtung gelöst.

Weil bei der erfindungsgemässen Vorrichtung jede Elektrode in einen eigenen Isolierstoffkörper eingebettet ist und mit diesem eine Baueinheit bildet, die durch mindestens eine ihr zugeordnete Feder unabhängig von der andern Baueinheit an das Schleiforgan angedrückt ist, hat der Konstrukteur es in der Hand, durch individuelle Bemessung der Federkräfte für jede Elektrode eine optimale Schleif- und Reinigungswirkung herbeizuführen, und dies trotz unterschiedlicher Härten, Abriebfestigkeiten und Korrosionseigenschaften der beiden Elektroden.

Zweckmässige und vorteilhafte Weiterbildungen der erfindungsgemässen Vorrichtung sind in den abhängigen Patentansprüchen definiert.

Weitere Einzelheiten und Vorteile ergeben sich aus der nun folgenden Beschreibung von Ausführungsbeispielen sowie aus der zugehörigen Zeichnung, in welcher die Erfindung rein beispielsweise veranschaulicht ist.

Fig. 1 zeigt einen axialen Längsschnitt durch die wesentlichen Teile einer erfindungsgemäss ausgebildeten Vorrichtung zum elektrochemischen Messen des Sauerstoffgehaltes in Flüssigkeiten;

Fig. 2 stellt einen Querschnitt nach der Linie II-II in Fig. 1 dar.

Die in der Zeichnung dargestellte Vorrichtung weist ein vertikal verlaufendes Tragrohr 10 auf, das an seinem unteren Ende mit einem einwärts vorspringenden Flansch 11 versehen ist. Am Flansch 11 ist ein hülsenförmiges Führungsgehäuse 12 befestigt, in welchem sich zwei Ringhülsen 13 und 14 befinden, von denen die eine koaxial in der anderen angeordnet ist. Die äussere Ringhülse 13 ist im Führungsgehäuse 12 in axialer Richtung verschiebbar geführt, und die innere Ringhülse 14 ist in bezug auf die äussere Ringhülse 13 ebenfalls in axialer Richtung verschiebbar. Die beiden Ringhülsen 13 und 14 sind gegen Drehung gesichert, z.B. indem ein im Führungsgehäuse 12 radial eingesetzter Stift 15 in Längsschlitze 16 bzw. 17 der Ringhülsen 13 und 14 eingreift. Selbstverständlich könnten auch andere Massnahmen zur Sicherung der Ringhülsen 13 und 14 gegen Drehung getroffen sein.

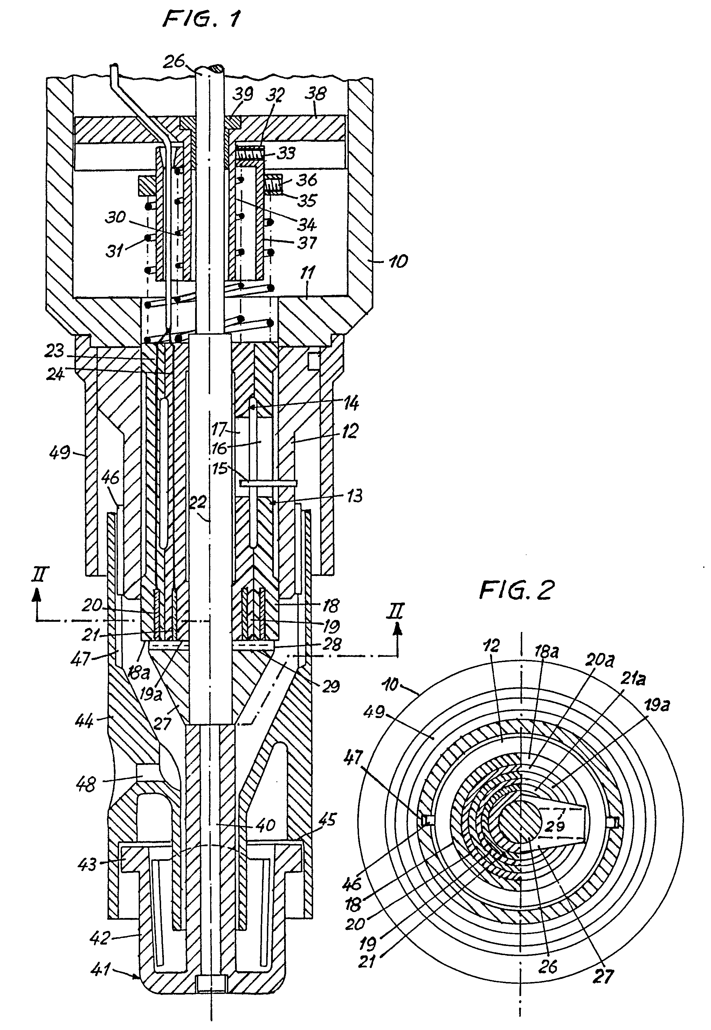

Jede der Ringhülsen 13 und 14 ist eine aus einem Isolierstoffkörper 18 bzw. 19 und einer darin eingebetteten Elektrode 20 bzw. 21 zusammengesetzte Baueinheit. Die aus unterschiedlichen Materialien bestehenden Elektroden 20 und 21 haben die Gestalt von koaxial zueinander angeordneten Rohrstücken. Aus Fig. 1 ist ersichtlich, dass mit Ausnahme der unteren axialen Endflächen 20a und 21a sämtliche Oberflächenpartien der Endflächen 20 und 21 innerhalb der Isolierstoffkörper 18 bzw. 19 liegen und die freien Elektrodenendflächen 20a und 21a zusammen mit den angrenzenden unteren Endflächen 18a und 19a der Isolierstoffkörper 18 und 19 in einer gemeinsamen Ebene liegen, zu welcher die gemeinsame geometrische Längsachse 22 des Führungsgehäuses 12, der Ringhülsen 13 und 14 und der Elektroden 20 und 21 senkrecht steht. Jeder Isolierstoffkörper 18 bzw. 19 enthält einen elektrischen Leiter 23 bzw. 24, der einerseits an die betreffende Elektrode 20 bzw. 21 angeschlossen ist und andererseits zu einem in der Zeichnung nicht dargestellten Anzeige- und/oder Registriergerät führt. Die innere Elektrode 21 besteht vorzugsweise aus einer Silber-Quecksilber-Legierung, während die andere Elektrode 20 z.B. aus Eisen, Zink oder Gold bestehen kann.

Die innere Ringhülse 14 ist von einer drehbaren Welle 26 durchsetzt, die einen Halter 27 für ein Schleiforgan 28 trägt. Der Halter 27 ist mit der Welle 26 drehfest verbunden und weist an seiner in Fig. 1 oberen Seite eine zur Welle 26 radial verlaufende Nut 29 auf, in welche das (zweiteilige) Schleiforgan 28 eingelegt ist. Letzteres liegt an die unteren Endflächen 18a, 20a bzw. 19a, 21a der Ringhülsen 13 und 14 an. Das obere Ende der Welle 26 steht mit einem (nicht dargestellten) Antriebsaggregat in Verbindung, durch welches die Welle 26 und das Schleiforgan 28 in Drehung versetzbar sind. Um den erforderlichen Anpressdruck zwischen dem Schleiforgan 28 und den Ringhülsen 13 und 14 zu erzeugen, sind zwei Schraubendruckfedern 30 und 31 vorgesehen, welche unterschiedliche Durchmesser aufweisen und koaxial zur Welle 26 oberhalb der Ringhülsen 13 und 14 angeordnet sind. Die innere Schraubendruckfeder 30 liegt mit ihrem unteren Ende gegen das obere Ende der inneren Ringhülse 14 und mit ihrem oberen Ende gegen einen Stützring 32 an, der in axialer Richtung verstellbar und mittels einer Stellschraube 33 feststellbar auf einer die Welle 26 umgebenden Manschette 34 sitzt, welche eine radiale Führung für einige Windungen der Schraubendruckfeder 30 bildet. In analoger Weise liegt die äussere Schraubendruckfeder 31 mit ihrem unteren Ende gegen das obere Ende der äusseren Ringhülse 13 und mit ihrem oberen Ende gegen einen zweiten Stützring 35 an, der in axialer Richtung verstellbar und mittels einer Stellschraube 36 feststellbar auf einer Manschette 37 sitzt, welche mit dem erstgenannten Stützring 32 verbunden ist und eine radiale Führung für einige Windungen der äusseren Schraubendruckfeder 31 bildet. Die bereits erwähnte Manschette 34 ist mit einer im Tragrohr 10 festgelegten Ringscheibe 38 verbunden, gegen welche ein auf der Welle 26 festsitzender Kragen 39 axial und radial abgestützt ist, so dass der Kragen 39 in bezug auf die Ringscheibe 38 drehbar ist.

Am unteren Ende der Welle 26 ist mittels eines Bolzens 40 ein becherartiger Endteil 41 befestigt, der eine nach oben ragende Umfangswand 42 mit einem Flansch 43 aufweist. Ein das Führungsgehäuse 12 mit etwas radialem Abstand umgebender Mantel 44 ist mittels einer Schulter 45 auf dem Flansch 43 des Endteils 41 abgestützt. Der Mantel 44 ist in axialer Richtung bewegbar, aber gegen Drehung gesichert, indem nach aussen vorspringende Längsrippen 46 des Führungsgehäuses 12 in entsprechende Längsnuten 47 an der Innenseite des Mantels 44 eingreifen. Die Schulter 45 des Mantels 44 und die die Schulter 45 abstützende Fläche des Flansches 43 des Endteils 41 verlaufen nicht in einer Ebene, zu welcher die geometrische Achse 22 der Welle 26 senkrecht steht, sondern haben eine solche Ausbildung, dass beim Drehen des Endteils 41 automatisch eine hin- und hergehende Bewegung des Mantels 44 in axialer Richtung, also aufwärts und abwärts, hervorgerufen wird. Der Mantel 44 ist innen trichterartig geformt und weist mindestens eine radiale Durchlassöffnung 48 auf, durch welche eine Flüssigkeit, deren Sauerstoffgehalt ermittelt werden soll, in das Innere des Mantels 44 eintreten und zu den freien Endflächen 20a und 21a der Elektroden 20 und 21 gelangen kann. Die obere Endpartie des Mantels 44 ist mit radialem Abstand von einer Schürze 49 umgeben, die an das Tragrohr 10 anschliessend mit der oberen Endpartie des Führungsgehäuses 12 verbunden ist.

Die Gebrauchs- und Wirkungsweise der beschriebenen Vorrichtung ist kurz wie folgt:

Die Vorrichtung wird in eine zu untersuchende Flüssigkeit mindestens so tief eingetaucht, dass der Mantel 44 vollständig von der Flüssigkeit umgeben ist. Die elektrischen Leiter 23 und 24 werden mit einem geeigneten Stromanzeige- und/oder -registriergerät verbunden, und der Welle 26 wird mittels der nicht dargestellten Antriebsvorrichtung eine konstante Drehbewegung bei z.B. etwa 10 Umdrehungen pro Minute erteilt. Durch die Drehung der Welle 26 werden dem Mantel 44 periodische Hub- und Senkbewegungen erteilt, wobei der freie Raum zwischen dem Mantel und den von diesem umschlossenen Teilen der Vorrichtung periodisch verkleinert und vergrössert wird. Hieraus resultiert eine Pumpenwirkung, die periodisch ein Einsaugen und Ausstossen von Flüssigkeit durch die Öffnung 48 zur Folge hat, wodurch die mit den freien Endflächen 20a und 21a der Elektroden 20 und 21 in Berührung stehende Flüssigkeit fortwährend erneuert wird. Durch die Drehung der Welle 26 wird zugleich das Schleiforgan 28 gedreht, welches fortwährend die freien Endflächen 20a und 21a der Elektroden 20 und 21 wie auch die angrenzenden Flächen 18a und 19a der Isolierstoffkörper 18 und 19 überstreicht und allmählich abschleift, wodurch die bei der elektrochemischen Sauerstoffmessung aktiven freien Elektrodenendflächen 20a und 21a fortlaufend gereinigt werden. Hierbei erfolgt zwar eine fortschreitende Abnutzung der Elektroden 20 und 21 wie auch der Isolierstoffkörper 18 und 19, aber die Form, die Grösse und der gegenseitige Abstand der freien Elektrodenendflächen 20a und 21a bleiben trotzdem unverändert, weshalb durch das Abschleifen keine nachteilige Beeinflussung der Sauerstoffmessung resultiert.

Durch axiales Verstellen der Stützringe 32 und 35 lässt sich die Spannung der Schraubendruckfedern 30 und 31 und damit die Kraft, mit welcher die Ringhülsen 13 und 14 an das Schleiforgan 28 angedrückt werden, individuell einstellen. So ist es möglich, die Andrückkraft den mechanischen Eigenschaften der zwei unterschiedlichen Elektroden 20 und 21 so anzupassen, dass eine optimale Schleif- und Reinigungswirkung für jede der beiden Elektroden erzielt wird, wodurch eine Verbesserung der Langzeitkonstanz der Messeinrichtung erreicht wird und die Perioden zwischen den erforderlichen Nacheichungen verlängert werden.

Bei einer nicht gezeigten Ausführungsvariante der beschriebenen Vorrichtung können die mit Stellschrauben 33 und 36 versehenen Stützringe 32 und 35 durch Schraubenmuttern ersetzt sein, die je auf einem Aussengewinde der betreffenden Manschette 34 bzw. 37 sitzen und durch Drehen axial verstellbar sind. Auch sind zahlreiche andere konstruktive Lösungen für das individuelle Einstellen der Federkräfte, mit denen die Ringhülsen 13 und 14 an das gemeinsame Schleiforgan 28 angedrückt werden, möglich. Gegebenenfalls ist es ausreichend, nur die Spannung einer der Federn einstellbar zu machen. Es ist auch möglich, für jede der Ringhülsen 13 und 14 zwei oder mehr Federn vorzusehen, von denen nicht alle verstellbar zu sein brauchen. Schliesslich kann auch noch eine Ausführungsform erwähnt werden, bei welcher eine der Ringhülsen 13 und 14 axial feststehend angeordnet ist, während das Schleiforgan 28 oder sein Träger 27 oder die Welle 26 in axialer Richtung verschiebbar ist und unter dem Einfluss einer Feder gegen die feststehende Ringhülse gedrängt wird, wobei die andere Ringhülse durch mindestens eine ihr zugeordnete andere Feder an das Schleiforgan angedrückt ist.

## Patentansprüche

1. Vorrichtung zum elektrochemischen Ermitteln des Sauerstoffgehaltes in Flüssigkeiten durch Messen des elektrischen Stromes zwischen zwei in die Flüssigkeit einzutauchenden Elektroden (20, 21) aus unterschiedlichen Materialien, welche Elektroden (20, 21) mit Ausnahme ihrer wirksamen freien Endflächen (20a, 21a) vollständig in Isoliermaterial (18, 19) eingebettet sind, wobei zur Reinigung der freien Elektrodenendflächen (20a, 21a) ein mittels einer Antriebsvorrichtung bewegbares Schleiforgan (28) durch mindestens eine Feder (30 oder 31) sowohl an die freien Elektrodenendflächen (20a, 21a) als auch an angrenzende Oberflächenpartien (18a, 19a) des Isoliermaterials (18, 19) angedrückt ist und die Elektroden (20, 21) derart geformt und angeordnet sind, dass bei fortschreitendem Abschleifen der Elektroden (20, 21) und des Isoliermaterials (18, 19) die Form, die Grösse und der gegenseitige Abstand der wirksamen Elektrodenendflächen (20a, 21a) unverändert bleiben, dadurch gekennzeichnet, dass jede Elektrode (20, 21) in einen eigenen Isolierstoffkörper (18, 19) eingebettet ist und mit diesem eine Baueinheit (13, 14) bildet, und dass einer jeden Baueinheit (13, 14) mindestens eine Feder (30, 31) zugeordnet ist, mittels welcher die Baueinheit (13, 14) unabhängig von der andern an das Schleiforgan (28) angedrückt ist.

2. Vorrichtung nach Anspruch 1, dadurch gekennzeichnet, dass zumindest einer der Baueinheiten (13, 14) Mittel (32, 33; 35, 36) zum Verstellen der Federkraft, mit welcher die Baueinheit (13, 14) an das Schleiforgan (28) angedrückt ist, zugeordnet sind.

3. Vorrichtung nach Anspruch 1, dadurch gekennzeichnet, dass einer jeden Baueinheit (13, 14) Mittel (32, 33; 35, 36) zum individuellen Einstellen der Federkraft, mit welcher die betreffende Baueinheit (13, 14) an das Schleiforgan (28) angedrückt ist, zugeordnet sind.

4. Vorrichtung nach einem der Ansprüche 1 bis 3, dadurch gekennzeichnet, dass die Baueinheiten (13, 14) Ringhülsen sind, von denen die eine koaxial in der andern angeordnet ist, dass die Elektroden (20, 21) parallel zu der gemeinsamen Längsachse (22) der Ringhülsen (13, 14) verlaufen und die freien Elektrodenendflächen (20a, 21a) sich je an einer axialen Endfläche (18a, 19a) der Ringhülsen (13, 14) befinden, und dass das Schleiforgan (28) mit einer die innere Ringhülse (14) koaxial durchsetzenden, drehbaren Welle (26) drehfest verbunden ist.

5. Vorrichtung nach Anspruch 4, dadurch gekennzeichnet, dass die Ringhülsen (13, 14) in einem Führungsgehäuse (12) in axialer Richtung individuell verschiebbar geführt, aber gegen Drehung gesichert sind.

6. Vorrichtung nach Anspruch 4 oder 5, dadurch gekennzeichnet, dass die den Ringhülsen (13, 14) zugeordneten Federn Schraubendruckfedern (30, 31) mit unterschiedlichen Durchmessern sind, welche Schraubendruckfedern (30, 31) die Welle (26) umgeben und koaxial zu letzterer angeordnet sind.

7. Vorrichtung nach Anspruch 6, dadurch gekennzeichnet, dass jede der Schraubendruckfedern (30, 31) mit ihrem einen Ende gegen die von dem Schleiforgan (28) abgewandte axiale Endfläche der betreffenden Ringhülse (13, 14) anliegt und mit ihrem andern Ende an einem verstellbaren und feststellbaren Stützring (32, 35) abgestützt ist.

## Claims

1. Apparatus for the electrochemical detection of the oxygen content of liquids by measurement of an electric current between two electrodes (20, 21) of different materials immersed into the liquid, which electrodes (20, 21) are fully embedded in insulating material (18, 19) with the exception of their effective free end surfaces (20a, 21a), wherein for cleaning the free electrode end surfaces (20a, 21a) a grinding device (28) displaceable by a driving apparatus is pressed via at least one spring (30 or 31) both to the free electrode end surfaces (20a, 21a) and to the adjacent surface area portions (18a, 19a) of the insulating material (18, 19), and the electrodes (20, 21) are so formed and arranged that in the course of progressive grinding off of the electrodes (20, 21) and the insulating material (18, 19), the shape, size and mutual spacing of the effective electrode end surfaces (20a, 21a) remain unchanged, characterised in that each electrode (20, 21) is embedded in its own body (18, 19) of insulating material and forms therewith a single structural unit (13, 14), and that at least one spring (30, 31) is associated with each structural unit (13, 14) by means of which the structural unit (13, 14) is pressed to the grinding device (28) independently of the other structural unit.

2. Apparatus according to claim 1, characterised in that at least one of the structural units (13, 14) is associated with means (32, 33; 35, 36) for adjustment of the spring force with which the structural unit (13, 14) is pressed against the grinding device (28).

3. Apparatus according to claim 1, characterised in that each structural unit (13, 14) is associated with means (32, 33; 35, 36) for the individual adjustment of the spring force with which the relevant structural unit (13, 14) is pressed against the grinding device (28).

4. Apparatus according to one of claims 1 to 3, characterised in that the structural units (13, 14) are sleeve rings arranged coaxially in one another, in that the electrodes (20, 21) extend parallel to the common longitudinal axis (22) of the sleeve rings (13, 14) and the free electrode end surfaces (20a, 21a) are disposed respectively at an axial end surface (18a, 19a) of the sleeve rings (13, 14), and in that the grinding device (28) is connected fast in rotation with a rotatable shaft (26) that projects coaxially through the inner sleeve ring (14).

5. Apparatus according to claim 4, characterised in that the sleeve rings (13, 14) are guided in a guide housing (12) for individual displacement in axial direction but are secured against rotation.

6. Apparatus according to claim 4 or 5, characterised in that the springs associated with the sleeve rings (13, 14) are coil springs (30, 31) of differing diameter, which coil springs (30, 31) surround and are arranged coaxially with the shaft (26).

7. Apparatus according to claim 6, characterised in that one end of each of the coil compression springs (30, 31) bears against the axial end surface of the relevant sleeve ring (13, 14), remote from the grinding device (28) and is supported at its other end at an adjustable and securable support ring (32, 35).

**Revendications**

1. Dispositif pour la détermination électrochimique de la teneur en oxygène dans les liquides par mesure du courant électrique entre deux électrodes (20, 21) en matériaux différents à immerger dans le liquide, lesquelles électrodes (20, 21), à l'exception de leurs surfaces extrêmes libres efficaces (20a, 21a), sont totalement noyées dans un matériau isolant (18, 19) et pour le nettoyage des surfaces extrêmes libres d'électrode (20a, 21a), un organe abrasif (28) mobile au moyen d'un dispositif d'entraînement est pressé par au moins un ressort (30 ou 31) aussi bien contre les surfaces extrêmes libres d'électrode (20a, 21a) que contre les parties de surface adjacentes (18a, 19a) du matériau isolant (18, 19) et les électrodes (20, 21) sont formées et disposées de manière que lors de la progression de l'abrasion des électrodes (20, 21) et du matériau isolant (18, 19) la forme, la grandeur et la distance mutuelle des surfaces extrêmes effectives des électrodes (20a, 21a) restent inchangées, caractérisé en ce que chaque électrode (20, 21) est noyée dans son propre corps isolant (18, 19) et forme avec celui-ci une unité (13, 14) et en ce qu'à chaque unité (13, 14) est affecté au moins un ressort (30, 31), au moyen duquel l'unité (13, 14) peut être pressée indépendamment de l'autre contre l'organe abrasif (28).

2. Dispositif selon la revendication 1, caractérisé en ce qu'au moins à l'une des unités (13, 14) sont affectés des moyens (32, 33; 35, 36) pour l'ajustement de la force de ressort, par laquelle l'unité (13, 14) est pressée contre l'organe abrasif (28).

3. Dispositif selon la revendication 1, caractérisé en ce qu'à chaque unité (13, 14) sont affectés des moyens (32, 33; 35, 36) pour l'ajustement individuel de la force de ressort par laquelle l'unité correspondante (13, 14) est pressée contre l'organe abrasif (28).

4. Dispositif selon l'une quelconque des revendications 1 à 3, caractérisé en ce que les unités (13, 14) sont des manchons annulaires, dont l'un est disposé coaxialement dans l'autre, en ce que les électrodes (20, 21) sont parallèles à l'axe longitudinal commun (22) des manchons annulaires (13, 14) et les surfaces extrêmes libres d'électrode (20a, 21a) se trouvent chacune sur une surface extrême axiale (18a, 19a) des manchons annulaires (13, 14) et en ce que l'organe abrasif (28) est relié solidaire en rotation à un arbre rotatif (26) traversant coaxialement le manchon annulaire interne (14).

5. Dispositif selon la revendication 4, caractérisé en ce que les manchons annulaires (13, 14) sont guidés mobiles, individuellement, en direction axiale, dans un boîtier de guidage (21), mais sont maintenus contre une rotation.

6. Dispositif selon la revendication 4 ou 5, caractérisé en ce qu'aux manchons annulaires (13, 14) sont affectés des ressorts à boudin de compression (30, 31) de diamètres différents, lesquels ressorts à boudin de compression (30, 31) entourent l'arbre (26) et sont disposés coaxialement à celui-ci.

7. Dispositif selon la revendication 6, caractérisé en ce que chacun des ressorts à boudin de compression (30, 31) repose, par une extrémité, contre la surface extrême axiale éloignée de l'organe abrasif (28) du manchon annulaire correspondant (13, 14) et s'appuie, par son autre extrémité, contre une bague d'appui mobile et réglable (32, 35).

0 144 325

FIG. 1

FIG. 2

7